Europäisches Patentamt

European Patent Office

Office européen des brevets

(11) Veröffentlichungsnummer: **0 302 173**
**A1**

(12) **EUROPÄISCHE PATENTANMELDUNG**

(21) Anmeldenummer: 88104531.4

(22) Anmeldetag: 22.03.88

(51) Int. Cl.⁴ **G01F 23/00 , G01F 23/22**

(30) Priorität: 04.08.87 DE 3725752

(43) Veröffentlichungstag der Anmeldung:
08.02.89 Patentblatt 89/06

(84) Benannte Vertragsstaaten:
**DE FR GB**

(71) Anmelder: **VDO Adolf Schindling AG**
**Gräfstrasse 103**
**D-6000 Frankfurt/Main(DE)**

(72) Erfinder: **Vetter, Egon**
**Frankfurter Strasse 118**
**D-6238 Hofheim/Ts.(DE)**
Erfinder: **Pfeifer, Thomas**
**Burgstrasse 6**
**D-6239 Eppstein(DE)**

(74) Vertreter: **Klein, Thomas, Dipl.-Ing. (FH)**
**Sodener Strasse 9 Postfach 6140**
**D-6231 Schwalbach a. Ts.(DE)**

(54) Verfahren und Vorrichtung zur Anzeige des Flüssigkeitsniveaus in einem kraftfahrzeugtank.

(57) Gegenstand der Erfindung sind ein Verfahren und eine Vorrichtung zur Anzeige des Flüssigkeitsniveaus in einem Kraftfahrzeugtank. In diesem sind ein Flüssigkeitsspiegeldetektor (1) und eine diesem nachgeschaltete Anzeigeeinrichtung (3) vorgesehen. Die Meßwerte des Flüssigkeitsstandes werden in vorgebbaren Zeitabständen zwischengespeichert und mit den aktuellen Meßwerten verglichen. Während der Fahrt durch den Vergleich festgestellte zunehmende Meßwerte werden nicht angezeigt.

EP 0 302 173 A1

Fig. 1

## Verfahren und Vorrichtung zur Anzeige des Flüssigkeitsniveaus in einem Kraftfahrzeugtank

Die Erfindung bezieht sich auf ein Verfahren zur Anzeige des Flüssigkeitsniveaus in einem Kraftfahrzeugtank mit einem Flüssigkeitsspiegeldetektor und mit einer Anzeigeeinrichtung, die in einem Kraftfahrzeug angeordnet sind, und auf eine Vorrichtung zur Durchführung des Verfahrens.

Es ist eine bei Kraftfahrzeugen für die Flüssigkeitsstandüberwachung verwendbare elektrothermisch arbeitende Vorrichtung bekannt, die als Flüssigkeitsspiegeldetektor eine Widerstandssonde enthält, die in wärmeleitender Verbindung mit der Flüssigkeit im Tank steht. An die Widerstandssonde ist eine elektronische Signalverarbeitungsschaltung angeschlossen, die eine Konstantstromquelle, eine Verzögerungsschaltung, einen Vergleicher und eine Überwachungseinrichtung aufweist. Die Überwachungseinrichtung erzeugt eine Meldung, wenn ein bestimmtes Flüssigkeitsniveau überschritten wird. Die bekannte Einrichtung erlaubt eine von der Temperatur der Flüssigkeit und der Umgebungstemperatur weitgehend unabhängige Messung (DE-AS-27 40 289).

Bei Meßeinrichtungen der vorstehend beschriebenen Art ergibt sich in Fahrzeugen das Problem, daß der Flüssigkeitsstand am Anbringungsort des Flüssigkeitsspiegeldetektors sowohl von der Fahrzeuglage gegenüber der Horizontalen als auch von Flüssigkeitsbewegungen während der Fahrt beeinflußt wird. Infolgedessen kann während der Fahrt eine Zunahme des Tankinhalts vorgetäuscht werden.

Der Erfindung liegt die Aufgabe zugrunde, für die Anzeige des Flüssigkeitsniveaus in einem Kraftfahrzeug ein Verfahren und eine Vorrichtung zu entwickeln, bei denen mit einem Flüssigkeitsdetektor und mit einer diesem nachgeschalteten Anzeigeeinrichtung beim Fahren eine von der Fahrzeuglage und den Flüssigkeitsbewegungen unabhängige Anzeige des Flüssigkeitsstandes erreicht werden kann.

Die Aufgabe wird für das Verfahren erfindungsgemäß dadurch gelöst, daß die Meßwerte des Flüssigkeitsstandes in vorgebbaren Zeitabständen zwischengespeichert und mit den aktuellen Meßwerten verglichen werden und daß während der Fahrt durch den Vergleich festgestellte zunehmende Meßwerte nicht angezeigt werden. Die Vortäuschung der Zunahme der Tankfüllung wird bei diesem Verfahren während des Fahrens vermieden. Wird der Tank dagegen bei laufendem Motor oder bei eingeschalteter Zündung gefüllt, dann werden zunehmende Füllstände angezeigt.

Vorzugsweise werden bei Längs- und Querbeschleunigungen und bei geneigtem Fahrzeug während der Fahrt festgestellte abnehmende Meßwerte nicht angezeigt. Bei Längs- und Querbeschleunigungen kann sich, insbesondere bei geringem Füllstand im Tank, das Niveau der Flüssigkeit am Einbauort des Flüssigkeitsspiegeldetektors erhöhen oder erniedrigen, ohne daß der Tankinhalt im entsprechenden Zeitpunkt zu- oder abgenommen hat. Entsprechendes gilt auch für die Neigung des Fahrzeugs z.B. bei der Fahrt auf ansteigenden oder abfallenden Straßen. Wenn eine Längs- und/oder Querbeschleunigung und/oder eine Neigung während der Fahrt festgestellt wird, dann wird die hierauf beruhende, am Flüssigkeitsspiegeldetektor festgestellte, scheinbare Zu- oder Abnahme des Tankinhalts nicht angezeigt.

Vorzugsweise werden die Meßwerte im Stillstand des Kraftfahrzeuges in Abhängigkeit von der Neigung des Kraftfahrzeuges gegenüber der Horizontalen sowie von der Geometrie des Tanks und des Flüssigkeitsspiegeldetektors korrigiert. Damit gibt die Anzeigeeinrichtung den Füllstand des Tanks bei stillstehendem Fahrzeug immer korrekt an. Im Stillstand ist eine derartige Korrektur aufgrund des eindeutigen Zusammenhangs zwischen Tankgeometrie, den Neigungswinkeln in Längs- und Querrichtung, der gemessenen Füllstandshöhe und dem Flüssigkeitsvolumen im Tank möglich, da der Flüssigkeitsspiegel eben ist. Bei Längs- und Querbeschleunigungen und plötzlichen Neigungsänderungen ist der Flüssigkeitsspiegel in der Regel nicht eben, so daß eine exakte Feststellung des vorhandenen Tankinhalts auf der Grundlage der geometrischen Beziehungen zwischen festgestellter Füllstandshöhe, Tankgeometrie und Neigung des Tanks gegen ein Bezugsniveau nicht möglich ist.

Eine Vorrichtung zur Durchführung des oben beschriebenen Verfahrens besteht erfindungsgemäß darin, daß ein Flüssigkeitsspiegeldetektor über einen Analog/Digital-Umsetzer mit einem Mikrocomputer oder Mikroprozessor verbunden ist, der einen mit einem Geschwindigkeitssensor im Kraftfahrzeug verbundenen Eingang aufweist, und daß dem Mikrocomputer oder Mikroprozessor die Anzeigeeinrichtung nachgeschaltet ist.

Mit dieser Vorrichtung wird verhindert, daß die Anzeigeeinrichtung während der Fahrt eine Zunahme des Tankinhalts vortäuscht. Die durch den Zündschlüssel bzw. den laufenden Motor in Betrieb gesetzte Füllstandsanzeige gibt dagegen während des Tankens eine Flüssigkeitszunahme an.

Bei einer bevorzugten Ausführungsform sind ein Sensor für die Längsneigung und die Längsbeschleunigung und ein Sensor für die Querneigung und die Querbeschleunigung des Kraftfahrzeuges jeweils mit dem Analog/Digital-Umsetzer verbunden, wobei in einem Festwertspeicher des Mikrocomputers oder Mikroprozessors eine Kennlinie zur Beseitigung des Einflusses der Neigung auf die Anzeige des Flüssigkeitsniveaus vorhanden ist. Längs- und Querbeschleunigungen sowie Neigungen sind wegen der eindeutigen Richtung der Erdbeschleunigung verwandte physikalische Größen, so daß zweckmäßigerweise für die Längs-und Querbeschleunigung und für die Längs- und Querneigung die gleichen Sensoren verwendet werden. Ein Vorteil dieser Vorrichtung ist darin zu sehen, daß im Fahrbetrieb bei Beschleunigungsvorgängen und/oder beim Fahren auf gegenüber der Horizontalen geneigten Straßen und Wegen nicht fälschlicherweise eine Zunahme oder Abnahme des Tankinhalts angezeigt wird. Insbesondere bei längeren Berg- und Talfahrten sowie in Kurven wird daher der Beschleunigungseinfluß auf die Anzeige beseitigt. Die Kennlinie zur Beseitigung des Einflusses der Neigung, die sog. "Tauchkennlinie" beinhaltet die Zuordnung des Flüssigkeitsvolumens im Tank zu der am Flüssigkeitsspiegeldetektor festgestellten Füllstandshöhe, der Längs- und Querneigung und der vorgegebenen Tankgeometrie. Zu den Meßwerten der Füllstandshöhe und den Neigungswinkeln in den beiden Hauptachsen des Fahrzeugs sind im Festwertspeicher die Tankinhalte abgespeichert, die im Stillstand die Meßwerte der Füllstandshöhe korrigieren. Während der Fahrt wird wegen des bei Beschleunigungen unebenen Flüssigkeitsspiegels die Zu- und Abnahme des Tankinhalts zur Vermeidung unerwünscht großer und schwankender Anzeigewerte nicht angezeigt.

Eine weitere Vorrichtung zur Durchführung des oben beschriebenen Verfahrens besteht erfindungsgemäß darin, daß ein Speicher über einen in vorgebbaren Zeitabständen betätigbaren Schalter an den Flüssigkeitsspiegeldetektor anschließbar ist, daß dem Flüssigkeitspiegeldetektor und dem Speicher ein Komparator nachgeschaltet ist, dessen Ausgang an einen Eingang einer Torschaltung angeschlosen ist, deren anderer Eingang mit einem Geschwindigkeitssensor im Fahrzeug verbunden ist, und daß die Torschaltung die Öffnung des Schalters und einen Umschalter steuert, durch den der Flüssigkeitsdetektor oder der Speicher mit der Anzeigeeinrichtung verbindbar ist. Auch bei dieser Vorrichtung wird verhindert, daß die Anzeigeeinrichtung während der Fahrt eine Zunahme des Tankinhalts vortäuscht.

Bei einer anderen zweckmäßigen Ausführungsform ist zwischen dem Flüssigkeitsspiegeldetektor und der Anzeigeeinrichtung eine Korrekturschaltung angeordnet, die mit Neigungssensoren für die Längs- und Querneigung des Fahrzeuges verbunden ist. Die Korrekturschaltung verarbeitet das vom Flüssigkeitsspiegeldetektor und die von den Neigungssensoren erzeugten Signale entsprechend der Geometrie des Tanks und des Flüssigkeit spiegeldetektors. Das Ausgangssignal der Korrekturschaltung gibt die Tankfüllung richtig an.

Bei einer bevorzugten Ausführungsform weist die Anzeigeeinrichtung eine schwach wirkende Dämpfungseinrichtung auf, die bei eingeschalteter Zündung mit dem Stillstand des Fahrzeuges nach einer Zeitverzögerung von wenigen Minuten aktiviert wird. Die schwache Dämpfung verhindert, daß bei längerem Anhalten mit schrägstehendem Fahrzeug die Flüssigkeitsanzeige springt.

Die Erfindung wird im folgenden anhand von in einer Zeichnung dargestellten Ausführungsbeispielen näher beschrieben, aus denen sich weitere Einzelheiten, Merkmale und Vorteile ergeben.

Es zeigen:

Fig. 1 ein Blockschaltbild einer Vorrichtung zur Anzeige des Flüssigkeitsniveaus in einem Kraftfahrzeugtank,

Fig. 2 ein Blockschaltbild einer anderen Ausführungsform einer Vorrichtung zur Anzeige des Flüssigkeitsniveaus in einem Kraftfahrzeugtank,

Fig. 3 ein Schaltbild einer Korrekturschaltung für eine genaue Tankanzeige bei einer Längs- und Querneigung eines Kraftfahrzeuges und

Fig. 4 ein Blockschaltbild einer anderen Vorrichtung zur Anzeige des Flüssigkeitsniveaus in einem Kraftfahrzeugtank.

Ein in einem nicht dargestellten Tank eines Kraftfahrzeuges angeordneter Flüssigkeitsspiegeldetektor (1), der beispielsweise ein Widerstandssensor ist, ist über einen Umshalter (2) mit einer Anzeigeeinrichtung (3) verbunden. Als Anzeigeeinrichtung (3) wird z.B. ein Zeigerinstrument verwendet, das nach dem Galvanometerprinzip arbeitet. An den Flüssigkeitsspiegeldetektor (1) ist ein Eingang eines Komparators (4) angeschlossen, dessen zweiter Eingang mit einem Speicher (5) verbunden ist. Der Eingang des Speichers (5) ist über einen weiteren Schalter (6) mit dem Ausgang des Flüssigkeitsspiegeldetektors (1) verbunden. Der Schalter (6) wird von einem Taktgenerator (7) periodisch geschlossen und geöffnet. Um den Einfluß unterschiedlicher Umgebungstemperaturen auf die Messung zu beseitigen, ist der Flüssigkeitsspiegeldetektor (1) bei der Ausbildung als Widerstandssensor z.B. auf die in der DE-AS 27 40 289 dargestellte Art mit einer Konstantstromquelle, einer Verzögerungsschaltung, einem Inverter und einem RC-Glied verbunden, wobei die Ausgänge des Inverters und des RC-Glieds an den Umschalter (2), den Schalter (6) und den Komparator (4) angeschlossen sind. Eine solche Maßnahme ist nicht erforderlich, wenn ein umgebungstemperaturunabhängiger Flüssigkeitsspiegeldetektor verwendet wird.

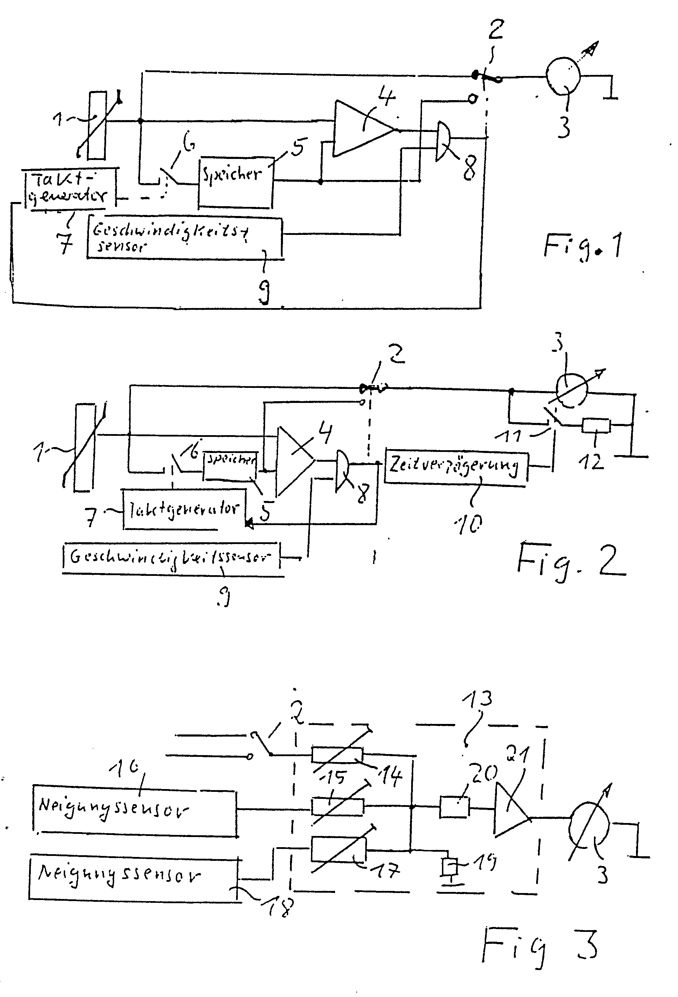

Mit dem Komparator (4), der an seinem Ausgang ein Steuersignal abgibt, wenn der im Speicher (5) enthaltene Wert kleiner als der vom Flüssigkeitsspiegeldetektor (1) ausgegebene Meßwert ist, ist eine Torschaltung (8) verbunden, die den Umschalter (2) betätigt. Ein zweiter Eingang der Torschaltung (8) ist an einem Geschwindigkeitssensor (9) angeschlossen. Die in Fig. 1 darge stellte Anordnung wird bei eingeschalteter Zündung mit Betriebsspannung versorgt. Der Geschwindigkeitssensor (9) gibt nur während der Fahrt ein Ausgangssignal ab, das in Verbindung mit einem entsprechenden Ausgangssignal des Komparators (4) die Torschaltung (8) durchlässig steuert. Nur wenn die Torschaltung (8) durchlässig ist, wird der Umschalter (2) an den Speicher (5) gelegt. Bei gesperrter Torschaltung (8) befindet sich der Umschalter (2) in Ruhekontaktlage, in der die Anzeigeeinrichtung (3) an den Flüssigkeitsspiegeldetektor (1) angeschlossen ist.

Bei eingeschalteter Zündung bzw. bei laufendem Motor is auf der Anzeigeeinrichtung (3) der vom Flüssigkeitsspiegeldetektor (1) erzeugte Meßwert sichtbar. Wird Flüssigkeit in den Tank eingefüllt, dann nimmt der Meßwert zu, was auf der Anzeigeeinrichtung (3) erkennbar ist. Während der Fahrt wird keine Flüssigkeit in den Tank eingefüllt. Veränderungen der Neigung des Fahrzeuges gegenüber der Horizontalen und Flüssigkeitsbewegungen aufgrund von Beschleunigungs- und Abbremsvorgängen können am Ort des Flüssigkeitsspiegeldetektors (1) eine Zunahme des Tankinhalts vortäuschen, so daß eine unzuverlässige Tankinhaltsanzeige entsteht. Um dies zu verhindern, wird der Ausgang des Flüssigkeitsspiegeldetektors (1) periodisch mit dem Speicher (5) verbunden. Der im Speicher (5) enthaltene Meßwert wird durch den Komparator (4) mit dem am Flüssigkeitsspiegeldetektor (1) anstehenden Meßwert verglichen. Übersteigt der am Flüssigkeitsspiegeldetektor (1) anstehende Meßwert den gespeicherten Meßwert, dann gibt der Komparator (4) ein entsprechendes Signal aus, das in Verbindung mit dem Ausgangssignal des Geschwindigkeitssensors (9) die Torschaltung (8) durchlässig steuert. Über das Ausgangssignal der Torschaltung (8) wird der Umschalter (2) in seine Arbeitslage bewegt, in der die Anzeigeeinrichtung (3) mit dem Speicher (5) verbunden ist. Der Taktgenerator (7) weist einen nicht näher bezeichneten Steuereingang auf, der an den Ausgang der Torschaltung (8) angeschlossen ist. Sobald die Torschaltung (8) durchlässig gesteuert ist, wird zugleich mit der Betätigung des Umschalters (2) der Taktgenerator (8) angehalten, so daß keine neuen Meßwerte in den Speicher (5) übernommen werden. Wenn die Meßwerte am Ausgang des Flüssigkeitsspiegeldetektors (1) kleiner als der gespeicherte Meßwert sind, sperrt der Komparator (4) die Torschaltung (8), wodurch der Taktgenerator (7) erneut Taktimpulse erzeugt und der Umschalter (2) in seine Ruhekontaktlage versetzt wird. Mit der in Fig. 1 dargestellten Vorrichtung werden daher während der Fahrt keine zunehmenden Tankinhalte angezeigt.

Die in Fig. 2 dargestellte Vorrichtung stimmt weitgehend mit der Vorrichtung gemäß Fig. 1 überein. Gleiche Teile sind in den Fig. 1 und 2 mit gleichen Bezugsziffern versehen. Bei der Anordnung gemäß Fig. 2 ist an die Torschaltung (8) zusätzlich eine Zeitverzögerungsschaltung (10) angeschlossen. Parallel zu der Anzeigeeinrichtung (3) ist ein weiterer Schalter (11) in Reihe mit einem Widerstand (12) angeordnet. Der Schalter (11) wird durch die Zeitverzögerungsschaltung (10) gesteuert. Durch die bei Sperrung der Torschaltung (8) auftretende Signalflanke wir die Zeitverzögerungsschaltung (10) angestoßen, deren Verzögerungszeit auf etwa zwei bis drei Minuten eingestellt ist. Beim Anhalten des Fahrzeuges sperrt der Geschwindigkeitssensor (9) die Torschaltung (8), wodurch die Zeitverzögerungsschaltung (10) angestoßen wird. Nach Ablauf der Verzögerungszeit schließt die Zeitverzögerungsschaltung (10) den Schalter (11), wodurch die Anzeigeeinrichtung schwach gedämpft wird. Aufgrund dieser schwachen Dämpfung wird verhindert, daß bei längerem Anhalten und schrägstehendem Fahrzeug die Anzeige plötzlich springt.

Bei der in Fig. 3 dargestellten Anordnung ist zwischen dem Umschalter (2) und der Anzeigeeinrichtung (3) eine Korrekturschaltung (13) angeordnet. Die Korrekturschaltung (13) enthält einen ersten, mit dem Umschalter (2) verbundenen, einstellbaren Widerstand (14). Ein zweiter, einstellbarer Widerstand (15) ist mit einem ersten Neigungssensor (16) für die Längsneigung des Fahrzeuges gegenüber der Horizontalen verbunden. Ein dritter einstellbarer Widerstand (17) ist mit einem zweiten Neigungssensor (18) für die Querneigung des Fahrzeuges verbunden. Die drei Widerstände (14), (15), (17) sind je an ihren zweiten Enden miteinander verbunden und an Widerstände (19), (20) angeschlossen, von denen einer an Bezugspotential und der andere an einen Eingang eines Operationsverstärkers (21) gelegt ist, dem die Anzeigeeinrichtung (3) nachgeschaltet ist.

Die Ausgangssignale der Neigungssensoren (16), (18) werden dem Ausgangssignal des Umschalters (2) derart überlagert, daß im Falle gleichbleibenden Tankinhalts bei der Zunahme des Flüssigkeitsstandes am Ort des Flüssigkeitsspiegeldetektors (1) und bei die Neigung des Fahrzeuges anzeigenden Signalen eine Zunahme des Ausgangssignals des Operationsverstärkers (21) verhindert wird. Bei einer Abnahme des Flüssigkeitsstandes am Ort des Flüssigkeitsspiegeldetektors (1) trotz gleichbleibendem Tankinhalt und bei die Neigung des Fahrzeuges anzeigenden Signalen wird eine Abnahme des Ausgangssignals des Operationsverstärkers (21) verhindert.

Die Geometrie des Tanks und des Flüssigkeitsspiegeldetektors (1), bestimmen das Ausmaß der Zu- oder Abnahme der Flüssigkeit bei vorgegebenen Neigungen. Dies kann durch Einstellung der Widerstände (14), (15), (17) berücksichtigt werden.

Die oben beschriebenen Vorrichtungen sind für die Feststellung des Nachtankens an der Anzeigeeinrichtung günstiger als eine Hystereseschaltung, die nur bei der Zunahme des Inhalts um eine vorgebbare Flüssigkeitsmenge anspricht. Kleine Zunahmen können mit einer solchen Vorrichtung nicht erfaßt werden. Wird nämlich die Hysterese zu klein eingestellt, dann können bei fahrdynamischen Beanspruchungen falsche Tankinhalte angezeigt werden.

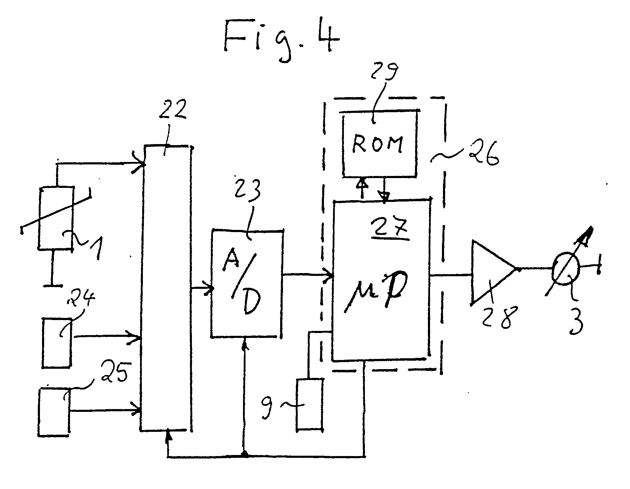

Bei der in Fig. 4 dargestellten Ausführungsform ist der Flüssigkeitsspiegeldetektor (1) über einen Multiplexer (22) mit einem Analog/Digital-Umsetzer (23) verbunden. An Eingänge des Multiplexers (22) sind ferner Sensoren (24), (25) angeschlossen. Der Sensor (24) gibt ein von der Längsbeschleunigung und der Längsneigung des Kraftfahrzeuges abhängiges Signal aus. Der Sensor (25) gibt ein entsprechendes Signal für die Querbeschleunigung und die Querneigung des Kraftfahrzeuges aus. Da Beschleunigungen und Neigungen, die über die konstante Erdbeschleunigung erfaßbar sind, verwandte physikalische Größen sind, werden Neigungen und Beschleunigungen mit den gleichen Sensoren gemessen.

An den Analog/Digital-Umsetzer (23) ist ein Mikrocomputer (26) angeschlossen, der z.B. einen Mikroprozessor (27) aufweist. Der Geschwindigkeitssensor (9) ist mit einem Eingang des Mikrocomputers (26) verbunden. Ein Ausgang des Mikrocomputers (26), der den Analog/Digital-Umsetzer (23) und den Multiplexer (22) steuert, ist über eine Treiberstufe (28) mit der Anzeigeeinrichtung (3) verbunden. Der Mikrocomputer (26) enthält einen Festwertspeicher (29) (ROM).

Im Festwertspeicher (29) ist eine Tabelle enthalten, aus der die Zuordnung des Tankinhalts zu der Neigung und der Füllstandshöhe des Flüssigkeitsspiegeldetektors (1) unter Berücksichtigung der Tankgeometrie hervorgeht. Diese Tabelle entspricht einer "Tauchkennlinie". Aus den vom Flüssigkeitsspiegeldetektor gemessenen Füllstandshöhen werden im Stillstand des Kraftfahrzeuges mittels der jeweiligen Neigungswerte in Längs- und Querrichtung über die "Tauchkennlinie" die jeweiligen Tankinhalte korrigiert, um den Tankinhalt richtig und genau anzuzeigen. Die Anzeigeverfälschung aufgrund der Neigung wird daher beseitigt.

Während der Fahrt wird mit Hilfe der Sensoren (9), (24) und (25) ein aufgrund von Beschleunigungen und/oder Neigungen vorgetäuschtes Ansteien oder Absinken des Tankinhalts unterdrückt.

Der Vorteil einer Korrektur der Anzeige während der Fahrt mit Hilfe der Sensoren (24), (25) ist darin zu sehen, daß nicht nur eine fälschliche Anzeige durch langsames Ansteigen der Anzeigewerte, sondern auch eine fälschliche Anzeige durch langsames Absinken -bedingt durch die vorhandene Dämpfung bei langen Kurven und Berg- und Talfahrten vermieden wird.

Die Sensoren (24), (25) verhindern während der Fahrt, d.h. in Verbindung mit dem Geschwindigkeitssignal dann die Anzeige eines abnehmenden Anzeigewerts, wenn Beschleunigungssignale auftreten.

## Ansprüche

1. Verfahren zur Anzeige des Flüssigkeitsniveaus in einem Kraftfahrzeugtank mit einem Flüssigkeitsspiegeldetektor und mit einer Anzeigeeinrichtung, die in einem Kraftfahrzeug angordnet sind,
dadurch gekennzeichnet,
daß die Meßwerte des Flüssigkeitsstandes in vorgebbaren Zeitabständen zwischengespeichert und mit den aktuellen Meßwerten verglichen werden und daß während der Fahrt durch den Vergleich festgestellte zunehmende Meßwerte nicht angezeigt werden.

2. Verfahren nach Anspruch 1,
dadurch gekennzeichnet,
daß bei Längs- und Querbeschleunigungen und bei geneigtem Fahrzeug während der Fahrt festgestellte abnehmende Meßwerte nicht angezeigt werden.

3. Verfahren nach Anspruch 1 oder 2,
dadurch gekennzeichnet,
daß die Meßwerte im Stillstand des Kraftfahrzeuges in Abhängigkeit von der Neigung des Kraftfahrzeuges gegenüber der Horizontalen sowie von der Geometrie des Tanks und des Flüssigkeitsspiegeldetektors korrigiert werden.

4. Vorrichtung zur Durchführung des Verfahrens nach Anspruch 1,
dadurch gekennzeichnet,
daß ein Flüssigkeitsspiegeldetektor (1) über einen Analog/Digital-Umsetzer (23) mit einem Mikrocomputer (26) oder Mikroprozessor verbunden ist, der einen mit einem Geschwindigkeitssensor (9) im Kraftfahrzeug verbundenen Eingang aufweist, und daß dem Mikrocomputer (26) oder Mikroprozessor die Anzeigeeinrichtung (3) nachgeschaltet ist.

5. Vorrichtung nach Anspruch 4 zur Durchführung des Verfahrens nach einem der Ansprüche 1 bis 3,
dadurch gekennzeichnet,

daß ein Sensor (24) für die Längsneigung und die Längsbeschleunigung und ein Sensor (25) für die Querneigung und die Querbeschleunigung des Kraftfahrzeuges jeweils mit dem Analog/Digital-Umsetzer verbunden sind und daß in einem Festwertspeicher (29) des Mikrocomputers (26) oder Mikroprozessors eine Kennlinie zur Beseitigung des Einflusses der Neigung auf die Anzeige des Flüssigkeitsniveaus vorhanden ist.

6. Vorrichtung zur Durchführung des Verfahrens nach Anspruch 1,
**dadurch gekennzeichnet,**
daß ein Speicher (5) über einen in vorgebbaren Zeitabständen betätigbaren Schalter (6) an den Flüssigkeitsspiegeldetektor (1) anschließbar ist, daß dem Flüssigkeitsspiegeldetektor (1) und dem Speicher (5) ein Komparator (4) nachgeschaltet ist, dessen Ausgang an einen Eingang einer Torschaltung (8) angeschlossen ist, deren anderer Eingang mit einem Geschwindigkeitssensor (9) im Fahrzeug verbunden ist, und daß die Torschaltung die Öffnung des Schalters (6) und einen Umschalter (2) steuert, durch den der Flüssigkeitsspiegeldetektor (1) oder der Speicher (5) mit der Anzeigeeinrichtung (3) verbindbar ist.

7. Vorrichtung nach Anspruch 6,
**dadurch gekennzeichnet,**
daß die Anzeigeeinrichtung (3) eine schwach wirkende Dämpfung aufweist, die bei eingeschalteter Zündung mit dem Stillstand des Fahrzeuges nach einer Zeitverzögerung von wenigen Minuten aktiviert wird.

8. Vorrichtung nach einem der vorhergehenden Ansprüche,
**dadurch gekennzeichnet,**
daß zwischen dem Flüssigkeitsspiegeldetektor (1) und der Anzeigeeinrichtung (3) eine Korrekturschaltung (13) angeordnet ist, die mit Neigungssensoren (16, 18) für die Längs- und Querneigung des Fahrzeuges verbunden ist.

Fig. 1

Fig. 2

Fig 3

# Fig. 4

## Europäisches Patentamt

# EUROPÄISCHER RECHERCHENBERICHT

Nummer der Anmeldung

EP 88104531.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 2 928 767 (BMW) | 1,2 | G 01 F 23/00 |
| A | * Seite 4, 3. Absatz - Seite 12, letzte Zeile; Fig. 1,2 * | 4-6 | G 01 F 23/22 |
| | -- | | |
| A | GB - A - 2 181 873 (DAIMLER BENZ) | 1,2,3, 4,6,7 | |
| | * Fig. 1-4; Seite 1, Zeilen 6-72 * | | |
| | -- | | |
| A | EP - A2 - 0 094 298 (REGIE) | 1,2,4 | |
| | * Seite 3, Zeile 1 - Seite 7, Zeile 9; Fig. 1-3 * | | |
| | -- | | |
| A | DE - A1 - 3 028 738 (HITACHI) | 1,2,4, 6 | |
| | * Seite 6, Zeile 20 - Seite 12, 3. Absatz * | | RECHERCHIERTE SACHGEBIETE (Int. Cl.4) |
| | -- | | |
| D,A | DE - B2 - 2 740 289 (JAEGER) | 1 | G 01 F |
| | * Ansprüche * | | |
| | ---- | | |

Der vorliegende Recherchenbericht wurde für alle Patentansprüche erstellt.

| Recherchenort | Abschlußdatum der Recherche | Prüfer |
|---|---|---|
| WIEN | 15-11-1988 | GRONAU |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82